# EUROPÄISCHE PATENTSCHRIFT

(11) **EP 0 922 182 B1**
(45) Veröffentlichungstag und Bekanntmachung des Hinweises auf die Patenterteilung: **20.11.2002**
(21) Anmeldenummer: 97941947.0
(22) Anmeldetag: 20.08.1997
(51) Int. Cl.: F21S 8/10, B60Q 1/115

(54) **SCHEINWERFERSYSTEM FÜR KRAFTFAHRZEUGE**
HEADLIGHT SYSTEM FOR MOTOR VEHICLES
SYSTEME DE PROJECTEUR POUR VEHICULES A MOTEUR

(30) Priorität: 28.08.1996 DE 19634750
(43) Veröffentlichungstag der Anmeldung: 16.06.1999
(73) Patentinhaber: Hella KG Hueck & Co., 59552 Lippstadt (DE)
(72) Erfinder: TROWITZSCH, Christian, D-28357 Bremen (DE)
(86) Internationale Anmeldenummer: EP9704522
(87) Internationale Veröffentlichungsnummer: WO98009111

(56) Entgegenhaltungen:
- EP-A- 0 340 735
- DE-A- 4 445 223
- DE-A- 19 522 856
- DE-A- 19 600 638
- FR-A- 2 685 439
- GB-A- 2 244 123
- GB-A- 2 297 148

## Beschreibung

Scheinwerfersystem für Kraftfahrzeuge, mit mindestens einem Scheinwerfer, der eine Gasentladungslampe zur Lichterzeugung aufweist, wobei der Gasentladungslampe ein Vorschaltgerät zum Starten und Betreiben zugeordnet ist, der mindestens eine Scheinwerfer Mittel zur Einstellung der Leuchtweite aufweist, und dem mindestens einen Scheinwerfer ein Steuergerät zugeordnet ist, in dem das Vorschaltgerät der Gasentladungslampe und eine Einrichtung zur automatischen Leuchtweiteregelung, die die Leuchtweite des Scheinwerfers in Abhängigkeit von Karosseriebewegungen zur Fahrbahnoberfläche regelt, in einer baulichen und funktionalen Einheit zusammengefasst sind, das Steuergerät Eingänge für die Betriebsspannung, Schaltsignale und Sensorsignale aufweist, mindestens einen Mikrorechner aufweist, . sowie Ausgänge aufweist, die mit der Gasentladungslampe und mit mindestens einem Stellglied für die Einstellung der Leuchtweite verbunden ist.

Aus der französischen Patentanmeldung FR-A 2 685 439 ist ein Scheinwerfersystem für Kraftfahrzeuge bekannt, das mindestens einen Scheinwerfer mit einer Gasentladungslampe zur Lichterzeugung aufweist, wobei der Gasentladungslampe ein Vorschaltgerät zum Starten und Betreiben zugeordnet ist. Der mindestens eine Scheinwerfer weist Mittel zur Einstellung der Leuchtweite auf und ihm ist ein Steuergerät zugeordnet, in dem das Vorschaltgerät der Gasentladungslampe und eine Einrichtung zur automatischen Leuchtweiteregelung in einer baulichen und funktionalen Einheit zusammengefasst sind.

Bei diesem Scheinwerfersystem erweist sich als nachteilig, dass das gemeinsame Steuergerät nur zur Ansteuerung einer Gasentladungslampe eines Scheinwerfers vorgesehen ist und die einzelnen funktionalen Komponenten nicht auf gemeinsame Funktionen, Eingänge und Ausgänge zurückgreifen, wodurch sich insbesondere bei dem Betrieb eines zweiten Scheinwerfers mit Gasentladungslampe eine aufwendige Konstruktion ergibt.

Aus der deutschen Patentschrift DE 41 16 244 C2 ist ein Kraftfahrzeugscheinwerfer bekannt, der mit einer Gasentladungslampe zur Lichterzeugung ausgerüstet ist. Der Kraftfahrzeugscheinwerfer weist dabei ein Gehäuse und eine das Gehäuse nach vorne abschließende Lichtscheibe sowie einen Reflektor, in dem die Gasentladungslampe angeordnet ist, auf. Des weiteren weist der Kraftfahrzeugscheinwerfer ein unmittelbar mit dem Scheinwerfer verbundenes Vorschaltgerät zum Starten und Betreiben der Gasentladungslampe auf. Um den gesetzlichen Anforderungen bezüglich der zu erzeugenden Abblendlichtverteilung gerecht zu werden, weist der Scheinwerfer zudem Mittel zur Einstellung der Leuchtweite auf, die manuell mechanisch zu betätigen sind. Bei diesem Kraftfahrzeugscheinwerfer erweist sich als nachteilig, daß jedem Scheinwerfer des Kraftfahrzeuges ein einzelnes Vorschaltgerät zum Betreiben der Gasentladungslampe zugeordnet werden, das einzig diese Funktion erfüllt. Des weiteren erweist sich als besonders nachteilig, daß der Kraftfahrzeugscheinwerfer keine automatische Leuchtweitenregelung aufweist, bei der die Leuchtweite des Scheinwerfers in Abhängigkeit von Karosseriebewegungen zur Fahrbahnoberfläche geregelt wird. Durch die erhöhte Lichtemission bei der Verwendung von Gasentladungslampen in Kraftfahrzeugscheinwerfern wird dabei die Blendgefahr bei Beladungsänderungen des Kraftfahrzeuges gesteigert und somit die Gefährdung im Straßenverkehr erhöht.

Die gleichen Nachteile treffen auf ein Scheinwerfersystem für Kraftfahrzeuge zu, das aus der europäischen Patentschrift EP 0 114 742 B1 bekannt ist. Dieses Scheinwerfersystem weist die gleichen, wie oben beschriebenen Merkmale auf und zusätzlich zeigt es die Möglichkeit auf, aus einem Vorschaltgerät zwei Gasentladungslampen, zum Beispiel für unterschiedliche Lichtfunktionen, zu betreiben.

Aus der europäischen Patentschrift EP 0 355 539 B1 ist eine Einrichtung zur Regelung der Leuchtweite eines Kraftfahrzeuges bekannt. Diese Einrichtung weist ein Steuergerät auf, welches in Abhängigkeit von gemessenen Sensorsignalen die Karosseriebewegung zur Fahrbahnoberfläche wiedergibt und die Leuchtweite der Scheinwerfer über Stelleinrichtungen am oder im Scheinwerfer automatisch regelt.

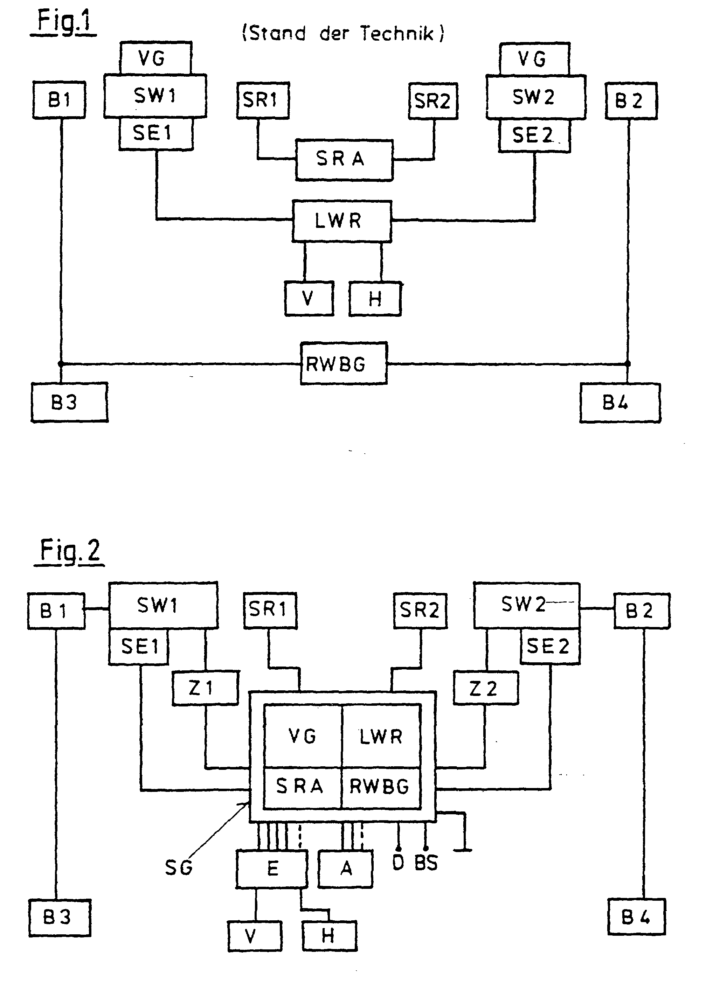

Figur 1 zeigt den zur Zeit üblichen Stand der Technik, der zur Ansteuerung von Kraftfahrzeugscheinwerfern üblich ist. Das Kraftfahrzeug weist dabei in der Regel zwei Scheinwerfer (SW1, SW2) auf, die mit hier nicht gezeigten Gasentladungslampen zur Lichterzeugung ausgerüstet sind. Jedem Scheinwerfer (SW1, SW2) ist ein gesondertes Vorschaltgerät (VG) zum Zünden und Betreiben je einer Gasentladungslampe zugeordnet. Je nach Anordnung und Aufbau des Vorschaltgerätes ist das Zündgerät zum Zünden der Gasentladungslampe in dem Vorschaltgerät angeordnet oder diesem ausgelagert. Des weiteren ist jedem Scheinwerfer (SW1, SW2) eine Stelleinrichtung (SE1, SE2) zugeordnet, die von einer Leuchtweitenregelung im Sinne einer Konstanthaltung der Leuchtweite angesteuert werden. Die Stelleinrichtungen (SE1, SE2) können dabei elektromotorisch oder pneumatisch betrieben werden. Die Leuchtweitenregelung (LWR) ist als ein Steuergerät ausgebildet, daß zumindest mit einem Vorderachssensor (V) und einem Hinterachssensor (H) zur Messung der relativen Lage der Fahrzeugkarosserie zur Fahrbahnoberfläche verbunden ist und Steuer- oder Regelparameter zur Ansteuerung der Stelleinrichtung (SE1, SE2) erzeugt. Zudem ist den Scheinwerfern (SW1, SW2) häufig eine Streuscheiben-Reinigungsanlage (SRA) zugeordnet, die ebenfalls aus einem Steuergerät der Streuscheiben-Reinigungsanlage (SRA) und von dieser angesteuerten Streuscheibenreinigern (SR1, SR2) besteht. Die Streuscheibenreiniger (SR1, SR2) können dabei aus einem von einem Wischerantrieb angetriebenen Wischer oder im Fall einer Hochdruck-Reinigungsanlage aus einer Pumpe und einer Spritzdüse bestehen. Des weiteren sind den Scheinwerfern (SW1, SW2) häufig Blinkleuchten (B1, B2) zugeordnet, die in den Scheinwerfern (SW1, SW2) integriert sein können. Zur Ansteuerung der Blinkleuchten (B1, B2) ist ein Steuergerät erforderlich, welches ein Richtungs-Wam-Blinkgeber (RWBG) ist. Bei einem solchen Aufbau eines Scheinwerfersystems erweist sich als nachteilig, daß zum Betrieb von zwei Scheinwerfern (SW1, SW2) mit Gasentladungslampen fünf einzelne Steuergeräte konstruiert, gefertigt und im Kraftfahrzeug angeordnet werden müssen. Diese bestehen aus zwei Vorschaltgeräten (VG), einer Streuscheiben-Reinigungsanlage (SRA), einer Leuchtweitenregelung (LWR) und einem Richtungs-Warn-Blinkgeber (RWBG).
Der Erfindung liegt die Aufgabe zugrunde, ein Scheinwerfersystem für Kraftfahrzeuge zu schaffen, das einfach und kostengünstig herstellbar ist und bei einer Reduzierung der notwendigen Bauteile gleichzeitig die Anzahl der mit dem Scheinwerfer verbundenen Steuergeräte reduziert.

Die Aufgabe wird erfindungsgemäß durch die Merkmale des Anspruchs 1 gelöst.

Dadurch, dass das Steuergerät mit einem ersten Scheinwerfer mit Gasentladungslampe und einem zweiten Scheinwerfer mit Gasentladungslampe elektrisch verbunden ist, wobei die Scheinwerfer rechts und links an der Vorderseite des Kraftfahrzeugs angeordnet sind und dass mindestens ein Zündgerät, zur Verkürzung der Hochspannung führenden Kabelstrecke aus dem Steuergerät ausgelagert ist, ergibt sich eine Reduzierung der einzeln in ein Kraftfahrzeug einzubauenden Steuergeräte und damit ein vereinfachter Einbau und Aufbau der Scheinwerfergruppe. Zudem wird der Verkabelungsaufwand, die Anzahl der Steckverbindungen sowie die Anzahl der benötigten mechanischen und elektronischen Bauelemente kostengünstig reduziert.

Die gleichen Vorteile ergeben sich, wenn das Steuergerät zusätzlich eine Einrichtung zur Reinigung der Lichtscheibe des Scheinwerfers aufweist, die eine Pumpe oder einen Wischerantrieb steuert.

Dieser Vorteil wird ebenfalls erzielt, wenn das Steuergerät zusätzlich einen Richtungs-Warn-Blinkgeber aufweist, der die Blinkleuchten ansteuert.

Des weiteren erweist sich als vorteilhaft, zwei zum Beispiel rechts und links an der Vorderseite des Kraftfahrzeuges angeordnete Scheinwerfer mit Gasentladungslampen aus einem einzigen Steuergerät zu versorgen. Hierbei kann es sich als günstig erweisen, entweder beide zur Zündung der Gasentladungslampen erforderlichen Zündgeräte aus dem Steuergerät auszulagern oder aber das Steuergerät nahe einem der beiden Scheinwerfer oder in diesen anzuordnen und das für die Zündung der Gasentladungslampe des entfernt angeordneten Scheinwerfers zugehörige Zündgerät aus dem Steuergerät auszulagern und dieses in oder nahe dem entfernt liegenden Scheinwerfer anzuordnen. Hierdurch ergibt sich jeweils der Vorteil, daß die im Zündfall vorliegende Hochspannung jeweils nur über eine kurze Kabelstrecke zwischen Zündgerät und Gasentladungslampe transportiert werden muß.

Im folgenden werden kurz zwei Ausführungsbeispiele des Erfindungsgegenstandes anhand von Zeichnungen erläutert. Gleiche oder gleichwirkende Bauteile sind dabei mit gleichen Bezugszeichen versehen.

Es zeigen
- Figur 1: einen üblichen Aufbau eines Scheinwerfersystems für Kraftfahrzeuge;
- Figur 2: einen ersten erfindungsgemäßen Aufbau eines Scheinwerfersystems;
- Figur 3: einen gegenüber Figur 2 leicht abgewandelten Aufbau eines Scheinwerfersystems für Kraftfahrzeuge.

Figur 2 zeigt ein erfindungsgemäßes Scheinwerfersystem für Kraftfahrzeuge, bei dem beispielhaft zwei Scheinwerfer (SW1, SW2) in dem Kraftfahrzeug angeordnet sind, die mit einer hier nicht gezeigten Gasentladungslampe zur Lichterzeugung ausgerüstet sind. Beiden Scheinwerfern (SW1, SW2) ist ein einziges Steuergerät (SG) zugeordnet, das alle für den Betrieb der Scheinwerfer (SW1, SW2) erforderlichen Mittel zur Schaltung, Steuerung und Regelung aller Funktionen der Scheinwerfer (SW1, SW2) aufweist. So sind in dem Steuergerät (SG) in baulicher und funktionaler Einheit, das heißt zum Beispiel in einem einzigen Steuergerätegehäuse, die ansonsten einzeln auszuführenden Steuergeräte eines Vorschaltgerätes (VG) zum Zünden und Betreiben der Gasentladungslampen eine Leuchtweitenregelung (LWR), eine Streuscheibenreinigungsanlage (SRA) und ein Richtungs-Warn-Blinkgeber (RWBG) zusammengefaßt. Das Steuergerät verfügt dabei über eine Anzahl Eingänge (E), an denen zum Beispiel ein Vorderachssensor (V) und ein Hinterachssensor (H) zur Bereitstellung von Lagesignalen der Fahrzeugkarosserie zur Fahrbahnoberfläche angeschlossen sein können. Zu den Eingängen (E) gehört ebenfalls ein Eingang für die Betriebsspannung (BS) des Steuergeräts (SG), wodurch die Versorgung mit der Betriebsspannung (BS) zentral erfolgen kann. Das gleiche gilt für den Masseanschluß. Zudem verfügt das Steuergerät (SG) über eine Anzahl Ausgänge (A). Zu den Ausgängen (A) gehören zum Beispiel Ausgänge, die über Einzel- oder Mehrfachleitungen unmittelbar mit den Scheinwerfern (SW1, SW2) verbunden sind und zur Versorgung der Gasentladungslampen sowie der Blinkleuchten (B1 bis B4) dienen können. Bei dem hier gezeigten Ausführungsbeispiel sind die Zündgeräte (Z1, Z2) zur Erzeugung einer Hochspannung zum Zünden der Gasentladungslampen dem Steuergerät ausgelagert und nahe oder in den Scheinwerfern (SW1, SW2) zur Reduzierung der Hochspannung transportierenden Kabellängen angeordnet. Bei einem anderen Ausführungsbeispiel können die Zündgeräte (Z1, Z2) auch in dem Steuergerät (SG) angeordnet sein. Des weiteren weist das Steuergerät (SG) Ausgänge zur Ansteuerung von Streuscheibenreinigern (SR1, SR2) auf. Diese können im Fall einer Hochdruck-Reinigungsanlage für die Lichtscheibe der Scheinwerfer (SW1, SW2) aus einer Pumpen- und Düsenanordnung bestehen, mittels der Wasser mit Hochdruck auf die Lichtscheibe gespritzt wird oder im Fall einer Wischanordnung aus einem Wischerantrieb, der einen Wischer betätigt. Des weiteren kann das Steuergerät (SG) eine Diagnoseschnittstelle (D) aufweisen, um zum Beispiel im Fehler- oder Wartungsfall Informationen aus dem Steuergerät (SG) abfragen zu können.

Bei dem hier gezeigten Ausführungsbeispiel werden die Blinkleuchten (B1 bis B4) elektrisch über die Scheinwerfer (SW1, SW2) kontaktiert. Bei einem anderen Ausführungsbeispiel können die Blinkleuchten (B1 bis B4) auch unmittelbar an Ausgänge (A) des Steuergerätes (SG) angeschlossen sein.

Bei einem weiteren Ausführungsbeispiel kann das Steuergerät (SG) auch unmittelbar einem der Scheinwerfer (SW1, SW2) in der Art zugeordnet sein, daß das Steuergerät nahe einem der Scheinwerfer (SW1, SW2) oder in einem der Scheinwerfer (SW1, SW2) angeordnet ist. In diesem Fall kann es sinnvoll sein, nur das Zündgerät (Z1 oder Z2) auszulagern, das dem entfernt von dem Steuergerät (SG) angeordneten Scheinwerfer (SW1 oder SW2) zur Zündung dessen Gasentladungslampe zugeordnet ist.

Das in Figur 2 gezeigte Ausführungsbeispiel ist nicht auf die Versorgung von zwei Scheinwerfern (SW1, SW2) mit Gasentladungslampen beschränkt. Bei anderen Ausführungsformen können auch mehr als zwei Scheinwerfer mit Gasentladungslampe an das Steuergerät angeschlossen werden.

Jeder Scheinwerfer (SW1, SW2) weist dabei mindestens eine Stelleinrichtung (SE1, SE2) auf, die dazu dient, die Leuchtweite des Scheinwerfers (SW1, SW2) einzustellen. Die Stelleinrichtungen (SE1, SE2) können dabei als elektromotorisch betriebene Stellelemente oder als pneumatisch betriebene Stellelemente ausgebildet sein, die zum Beispiel einen Reflektor in den Scheinwerfern (SW1, SW2) verschwenken, in den die Gasentladungslampe eingesetzt ist. Die Stelleinrichtungen (SE1, SE2) sind elektrisch leitend mit dem Steuergerät (SG) zur Übermittlung von Eingangs- und Ausgangssignalen verbunden.

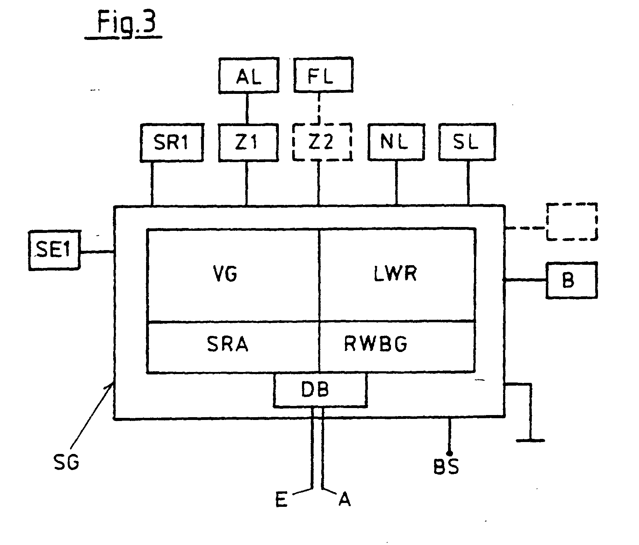

In Figur 3 ist ein weiteres Ausführungsbeispiel des Erfindungsgegenstandes aufgezeichnet. Auch in diesem Ausführungsbeispiel ist ein Steuergerät (SG) gezeigt, das beispielhaft ein Vorschaltgerät (VG) zur Ansteuerung mindestens einer Gasentladungslampe, eine Leuchtweitenregelung (LWR) zur Regelung der Leuchtweite des Scheinwerfers, eine Streuscheiben-Reinigungsanlage (SRA) und einen Richtungs-Warn-Blinkgeber (RWBG) aufweist. Das hier gezeigte Steuergerät (SG) ist, um einen kompakten Scheinwerfer-Steuergeräteaufbau zu ermöglichen, nur einem Scheinwerfer in der Art zugeordnet, daß es in der Nähe oder in dem Scheinwerfer angeordnet ist. Auch in diesem Fall weist das Steuergerät (SG) einen zentralen Anschluß für die Betriebsspannung (BS) und die Masse auf. Zur Reduzierung der Anschlüsse weist das Steuergerät zudem eine Datenbus-Schnittstelle (DB) auf, über die alle wesentlichen Eingangs- und Ausgangssignale empfangen und gesendet werden. Die Eingänge (E) und Ausgänge (A) des Steuergerätes (SG) erhalten somit einen vereinfachten Aufbau. Das Steuergerät (SG) ist hier beispielhaft wiederum mit mindestens einer Stelleinrichtung (SE1) verbunden, die die Leuchtweite des hier nicht gezeigten Scheinwerfers einstellt. Des weiteren ist das Steuergerät (SG) mit mindestens einem Streuscheibenreiniger (SR1) verbunden. Zudem ist das Steuergerät (SG) zur Erzeugung folgender Lichtfunktionen mit entsprechenden Leuchtmitteln verbunden: einer Abblendlichtfunktion (AL), einer Fernlichtfunktion (FL), einer Nebellichtfunktion (NL), einer Stand-/Positionslichtfunktion (SL) und den schon genannten Blinkleuchten (B). Die Abblendlichtfunktion (AL) enthält eine Gasentladungslampe zur Lichterzeugung und kann über ein im Steuergerät (SG) integriertes oder, wie hier gezeigt, ausgelagertes Zündgerät (Z1) angeschlossen sein. Die Fernlichtfunktion (FL), wie auch die anderen aufgeführten Funktionen, die optional angeschlossen sein können, können als normale Glühlampen ausgebildet sein. Bei einem besonderen Ausführungsbeispiet kann die Fernlichtfunktion (FL) auch über eine Gasentladungslampe dargestellt werden, so daß in diesem Fall das Steuergerät parallel oder alternativ zwei Lichtfunktionen mit Gasentladungslampe ansteuert. In diesem Fall wird die Gasentladungslampe der Fernlichtfunktion (FL) ebenfalls über ein integriertes oder extern angeordnetes Zündgerät (Z2) angesteuert. Zur alternativen Inbetriebnahme der Abblendlichtfunktion (AL) und der Fernlichtfunktion (FL) in dem Fall, wenn beide Funktionen mit einer Gasentladungslampe dargestellt werden, kann das Steuergerät über eine hier nicht gezeigte Umschalteinrichtung verfügen über die wahlweise die mindestens zwei Entladungslampen elektrisch betrieben werden können. Je nach Anordnung der Zündgeräte (Z1, Z2) intern oder extern kann die Umschalteinrichtung vor oder hinter den Zündgeräten (Z1, Z2) angeordnet sein.

Bei weiteren Ausführungsbeispielen können auch zusätzliche Lichtfunktionen mit und ohne Gasentladungslampe des Kraftfahrzeuges durch das mindestens eine Steuergerät betrieben werden. Die Integration der Datenbus-Schnittstelle (DB) ermöglicht dabei den einfachen Austausch der notwendigen Signale.

## Patentansprüche

1. Scheinwerfersystem für Kraftfahrzeuge, mit mindestens einem Scheinwerfer (SW), der eine Gasentladungslampe zur Lichterzeugung aufweist, wobei der Gasentladungslampe ein Vorschaltgerät (VG) zum Starten und Betreiben zugeordnet ist, der mindestens ein Scheinwerfer (SW) Mittel zur Einstellung der Leuchtweite aufweist, und dem mindestens einen Scheinwerfer (SW) ein Steuergerät (SG) zugeordnet ist, in dem das Vorschaltgerät (VG) der Gasentladungslampe und eine Einrichtung zur automatischen Leuchtweiteregelung (LWR), die die Leuchtweite des Scheinwerfers (SW) in Abhängigkeit von Karosseriebewegungen zur Fahrbahnoberfläche regelt, in einer baulichen und funktionalen Einheit zusammengefasst sind, das Steuergerät (SG) Eingänge (E) für die Betriebsspannung (BS), Schaltsignale und Sensorsignale aufweist, mindestens einen Mikrorechner aufweist, sowie Ausgänge (A) aufweist, die mit der Gasentladungslampe und mit mindestens einem Stellglied (SE) für die Einstellung der Leuchtweite verbunden ist, **dadurch gekennzeichnet, dass** das Steuergerät (SG) mit einem ersten Scheinwerfer (SW1) mit Gasentladungslampe und einem zweiten Scheinwerfer (SW2) mit Gasentladungslampe elektrisch verbunden ist, wobei die Scheinwerfer (SW1, SW2) rechts und links an der Vorderseite des Kraftfahrzeugs angeordnet sind und dass mindestens ein .Zündgerät (Z1, Z2), zur Verkürzung der Hochspannung führenden Kabelstrecke aus dem Steuergerät (SG) ausgelagert ist.

2. Scheinwerfersystem nach Anspruch 1, **dadurch gekennzeichnet, dass** das Steuergerät (SG) eine Anlage zur Reinigung der Lichtscheibe (SRA) des Scheinwerfers (SW) aufweist, die eine Pumpe oder einen Wischerantrieb steuert.

3. Scheinwerfersystem nach Anspruch 2, **dadurch gekennzeichnet, dass** beide zu dem Vorschaltgerät (VG) gehörenden Zündgeräte (Z1, Z2) zum Zünden der Gasentladungslampen aus dem Steuergerät (SG) ausgelagert sind und nahe oder in dem jeweiligen Scheinwerfer (SW1, SW2) angeordnet sind.

4. Scheinwerfersystem nach Anspruch 3, **dadurch gekennzeichnet, dass** das Steuergerät (SG) nahe oder in dem ersten Scheinwerfer (SW1) angeordnet ist und dass das zweite Zündgerät (Z2) aus dem Steuergerät (SG) ausgelagert ist und nahe oder in dem zweiten Scheinwerfer (SW2) angeordnet ist.

5. Scheinwerfersystem nach mindestens einem der vorstehenden Ansprüche, **dadurch gekennzeichnet, dass** das Steuergerät (SG) einen Richtungs-Warn-Blinkgeber (RWBG) aufweist, der die Blinkleuchten (B) ansteuert.

## Claims

1. Headlamp system for motor vehicles, having at least one headlamp (SW) which incorporates a gas discharge lamp for generating the light, and allocated to the gas discharge lamp a ballast (VG) for start-up and operation, the at least one headlamp (SW) having means for adjusting the headlight illumination range, and there being allocated to the at least one headlamp (SW) a controller (SG) in which the ballast (VG) of the gas discharge lamp and a device for automatic headlight range adjustment (LWR) which controls the illumination range of the headlamp (SW) in dependence on movements by the vehicle body relative to the road surface are combined in one constructional and functional unit, the controller (SG) incorporating inputs (E) for the operating voltage (BS), control signals and sensor signals, at least one microcomputer, and also outputs (A) which are connected to the gas discharge lamp and to at least one actuator (SE) for adjusting the headlight illumination range, **characterised in that** the controller (SG) is electrically connected to a first headlamp (SW1) having a gas discharge lamp and to a second headlamp (SW2) having a gas discharge lamp, the headlamps (SW1, SW2) being arranged to the right and left on the front of the motor vehicle, and that at least one starting device (Z1, Z2) for shortening the cable run which carries high voltage has been moved out of the controller (SG).

2. Headlamp system according to claim 1, **characterised in that** the controller (SG) incorporates a system for cleaning the lens plate (SRA) of the headlamp (SW) which operates a pump or wiper drive.

3. Headlamp system according to claim 2, **characterised in that** both starting devices (Z1, Z2) for igniting the gas discharge lamps and which form part of the ballast (VG) have been moved out of the controller (SG) and are arranged close to or in the respective headlamp (SW1, SW2).

4. Headlamp system according to claim 3, **characterised in that** the controller (SG) is arranged close to or in the first headlamp (SW1) and that the second starting device (Z2) has been moved out of the controller (SG) and is arranged close to or in the second headlamp (SW2).

5. Headlamp system according to at least one of the preceding claims, **characterised in that** the controller (SG) incorporates a direction and hazard-warning flasher unit (RWBG) which activates the turn signal lamps (B).

## Revendications

1. Système de phare pour véhicules automobiles comportant au moins un phare (SW), qui possède une lampe à décharge pour produire une lumière, et dans lequel un ballast (VG) pour le démarrage et le fonctionnement est associé à la lampe à décharge, le au moins un phare (SW) comporte des moyens pour régler la portée de l'éclairement, et à au moins un phare (SW) est associé un appareil de commande (SG), et dans lequel le ballast (VG) de la lampe à décharge et un dispositif (LWR) de régulation automatique de l'éclairement, qui règle la portée d'éclairement du phare (SW) en fonction de déplacements de la carrosserie par rapport à la surface de la chaussée, sont rassemblés pour former une unité de construction / unité fonctionnelle, l'appareil de commande (SG) comporte des entrées (E) pour la tension de fonctionnement (BS), des signaux de commutation et des signaux de capteurs, comporte au moins un microcalculateur, et comporte des sorties (A), qui sont reliées à au moins un organe de réglage (SE) pour le réglage de la portée de l'éclairement, **caractérisé en ce que** l'appareil de commande (SG) est relié électriquement à un premier phare (SW1) comportant une lampe à décharge dans un gaz et un second phare (SW2) comportant une lampe à charge dans un gaz, les phares (SW1, SW2) étant disposés à droite et à gauche sur le côté avant du véhicule automobile, et qu'au moins un appareil d'amorçage (Z1, Z2) est monté en dehors de l'appareil de commande (SG) afin de raccourcir la section de câble amenant la haute tension.

2. Système de phare selon la revendication 1, **caractérisé en ce que** l'appareil de commande (SG) comporte une installation pour nettoyer la plaque de verre (SRA) du phare (SW1), qui commande une pompe ou un dispositif d'entraînement d'essuie-glace.

3. Système de phare selon la revendication 2, **caractérisé en ce que** les deux appareils d'amorçage (Z1, Z2), qui font partie du ballast (VG) pour l'amorçage des lampes à décharge sont montés à l'extérieur de l'appareil de commande (SG) et sont disposés à proximité du phare considéré (SW1, SW2) ou dans ce phare.

4. Système de phare selon la revendication 3, **caractérisé en ce que** l'appareil de commande (SG) est disposé à proximité du ou dans le premier phare (SW1) et que le second appareil d'amorçage (Z2) est monté à l'extérieur de l'appareil de commande (SG) et à proximité du ou dans le second phare (SW2).

5. Système de phare selon au moins l'une des revendications précédentes, **caractérisé en ce que** l'appareil de commande (SG) comporte un indicateur de changement de direction clignotant (RWBG) qui commande les lampes clignotants (B).
